(19) Europäisches Patentamt
European Patent Office
Office européen des brevets

(11) EP 4 609 981 A1

(12) **EUROPEAN PATENT APPLICATION**
published in accordance with Art. 153(4) EPC

(43) Date of publication:
**03.09.2025 Bulletin 2025/36**

(21) Application number: **23918473.2**

(22) Date of filing: **25.08.2023**

(51) International Patent Classification (IPC):
***B23K 20/12*** *(2006.01)*

(52) Cooperative Patent Classification (CPC):
**B23K 20/12**

(86) International application number:
**PCT/JP2023/030825**

(87) International publication number:
**WO 2024/157513 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.01.2023 JP 2023009629**

(71) Applicant: **JFE Steel Corporation**
**Tokyo 100-0011 (JP)**

(72) Inventor: **MATSUSHITA, Muneo**
**Tokyo 100-0011 (JP)**

(74) Representative: **Grünecker Patent- und Rechtsanwälte**
**PartG mbB**
**Leopoldstraße 4**
**80802 München (DE)**

(54) **TAILORED BLANK MATERIAL, AND METHOD AND APPARATUS FOR PRODUCING TAILORED BLANK MATERIAL**

(57) Provided is a tailor welded blank that can be produced at low cost with high productivity and that has excellent press workability, even when thin steel sheets are used as materials. A butt joint includes a stir zone and thermo-mechanically affected zones adjacent to the stir zone, and the stir zone has an upper stir zone and a lower stir zone adjacent to each other in a thickness direction, and the tailor welded blank satisfies the relationships according to the following formulas (1) to (3):

$$Pj \geq 0.9 \times PbmL \ldots (1);$$

$TszL \geq 0.9 \times TbmL$ ... (2); and

$$TszH \leq 1.1 \times TbmH \ldots (3).$$

EP 4 609 981 A1

FIG. 1

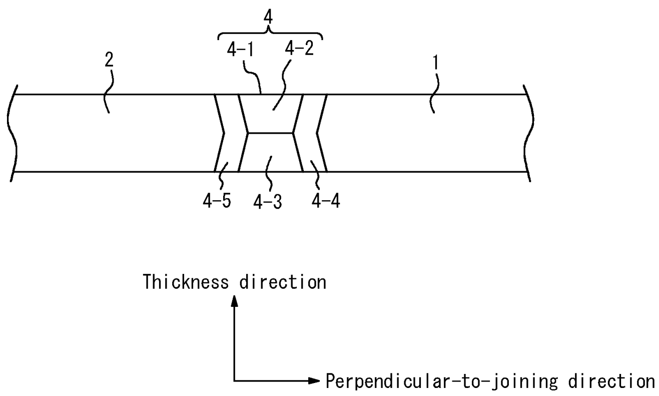
4
4-1
4-2
2
1
4-5
4-3
4-4
Thickness direction
Perpendicular-to-joining direction

## Description

TECHNICAL FIELD

The present disclosure relates to a tailor welded blank, and a tailor welded blank production method and a tailor welded blank production apparatus.

BACKGROUND

In recent years, the reduction of $CO_2$ emissions has become an urgent issue in the field of transportation equipment, such as automobiles. Accordingly, further weight reduction of automotive bodies (hereinafter, may be referred to as "automotive body weight reduction") is being promoted, and various measures are being considered from multiple aspects, such as materials, structures, or assembly and construction methods.

As one of such measures for automotive body weight reduction, the application of tailor welded blanks to structural parts of automobiles is being considered.

In general, structural parts of automobiles are produced by pressing blanks made of a single material (steel sheet). In this case, the thickness and the shape of the material are determined based on a part that receives the most stress during the press working or a part with the highest level of required characteristics. As a result, structural parts of automobiles have excessive strength and characteristics in some portions.

On the other hand, in tailor welded blanks, for example, high strength steel sheets or thick steel sheets can be placed only in some portions in which high strength is required, and low strength steel sheets or thin steel sheets can be placed in other portions. Here, tailor welded blanks refer to blank materials made of steel sheets of different thicknesses and steel grades joined together. In tailor welded blanks, anti-corrosion steel sheets can be placed only in portions in which corrosion resistance is required, and common steel sheets can be placed in other portions. In this way, because appropriate characteristics can be given to each part in a single blank material, tailor welded blanks are advantageous in reducing the weight of parts.

As technology related to such tailor welded blanks, for example, Patent Literature (PTL) 1 describes the following.

A laser welding method in tailored blanking in which press forming is performed after welding sheet materials, wherein, when a thick sheet and a thin sheet of different sheet thicknesses are butted together and a laser beam is emitted onto a butted portion for fusion joining, the laser beam is emitted to a difference in level ($d_f$), which falls within a range in which the difference in level ($d_f$) onto which the laser beam is emitted, the sheet thickness ($t_1$) of the thick sheet, the sheet thickness ($t_2$) of the thin sheet, and an average sheet thickness [(tave = (t1 + t2/2)] satisfy the relation

$$\mathrm{tave}\cdot\tan 10 \leq d_f \leq \mathrm{tave}\cdot\tan 30.$$

CITATION LIST

Patent Literatures

PTL 1: JP 3230228 B2

PTL 2: JP H07-505090 A

PTL 3: JP 2004-050189 A

PTL 4: JP 3261433 B2

PTL 5: JP 4838385 B2

PTL 6: JP 4838388 B2

PTL 7: JP 6825630 B2

PTL 8: JP 6737347 B2

## SUMMARY

### (Technical Problem)

As in the technology described in PTL 1, tailor welded blanks are generally produced by joining steel sheets as materials (hereinafter, may be referred to as "joined materials") using the laser welding method. The laser welding method has the advantage of low thermal strain during welding. The laser welding method also has the advantage of deep penetration and highspeed welding because of its high energy density welding.

Meanwhile, from the viewpoint of automotive body weight reduction, the use of thinner steel sheets, especially those with a thickness of 2.5 mm or less, and especially those with a thickness of less than 2.0 mm (hereinafter, may be referred to as thin steel sheets), is being promoted thanks to their higher strength.

In the aforementioned laser welding method, the laser beam is focused by a lens and usually concentrated into a beam diameter of 1 mm or less on the joined materials. Accordingly, in a case in which butt welding is performed, high butt accuracy is required for the steel sheets to be used as materials.

Shear cutting is generally used for cutting steel sheets. However, the accuracy of cut surfaces by shear cutting is not adequate, and this tendency is particularly evident when cutting thin steel sheets. Accordingly, in a case in which thin steel sheets cut into a predetermined shape by shear cutting are butted together and used as joined materials to be laser welded, the butting accuracy of end surfaces (shear-cut surfaces) of the joined materials is poor, and welding defects are likely to occur. Furthermore, the beam focus and the aiming position are misaligned, resulting in welding failure and causing variations in joint strength.

Accordingly, in a case in which tailor welded blanks are produced using thin steel sheets as materials, it is necessary to improve the butt accuracy of end surfaces of the joined materials by performing refining processing on the shear-cut surfaces and to control the beam focus and the aiming position with high accuracy. This leads to the problems of low productivity and increased production cost. Furthermore, in the laser welding method, as steel sheets as joined materials become stronger and more highly alloyed, cracking due to impurity segregation during melting and solidification (so-called solidification cracking) and cracking due to hydrogen intrusion (so-called hydrogen cracking) may occur. All of the aforementioned welding defects, solidification cracking, and hydrogen cracking can be origins of fractures during the press working of tailor welded blanks.

The present disclosure has been developed to address the above problems and aims to provide a tailor welded blank that can be produced at low cost with high productivity and that has excellent press workability, even when thin steel sheets are used as materials.

The present disclosure also aims to provide a tailor welded blank production method and a tailor welded blank production apparatus.

### (Solution to Problem)

The present inventors then have made ardent studies in order to achieve the aforementioned objectives. First, the present inventors have examined whether the above problems can be solved by adjusting laser welding conditions when producing a tailor welded blank using thin steel sheets as materials. The above problems, however, cannot be solved effectively only by adjusting the laser welding conditions.

The present inventors therefore have attempted to apply a joining method other than laser welding in producing a tailor welded blank using thin steel sheets as materials. As a result, the present inventors have found the following findings.

(a) In production of a tailor welded blank using thin steel sheets as materials, it is effective to apply friction stir welding, which is a solid-state joining, in solving the above problems. Here, the friction stir welding is a solid-state joining that makes use of the frictional heat between a rotating tool and joined materials and the plastic flow of the joined materials. That is, the rotating tool friction-stirs an unjoined portion (area to be joined) of the joined materials. When the unjoined portion of the joined materials is heated by frictional heat, plastic flow begins. The interface between the plastic flow area and base metal portions (steel sheets) is greatly elongated. As a result, a joined portion (hereinafter, may be referred to as a joint or a butt joint) is formed without melting the joined materials.

(b) From the viewpoint of increasing the joining speed while preventing the occurrence of defects during joining, it is effective to apply so-called double-sided friction stir welding. Additionally, technology related to friction stir welding is described in, for example, PTL 2 to PTL 8, but any of the technology is not limited to the application of producing tailor welded blanks.

(c) A butt joint of a tailor welded blank produced by double-sided friction stir welding includes a stir zone (SZ) and thermo-mechanically affected zones (TMAZs) adjacent to the stir zone. The stir zone has an upper stir zone (U-SZ) and a lower stir zone (L-SZ) adjacent to each other in a thickness direction of the tailor welded blank.

(d) Here, when a tailor welded blank is subjected to tensile deformation by press working, strain tends to concentrate in a butt joint, especially in the thermo-mechanically affected zones, and cracking originated in these zones is likely to occur. In this respect, the occurrence of cracking originating in the thermo-mechanically affected zones when tensile deformation occurs can be effectively prevented, by satisfying the relationship according to the following formula (1).

$$Pj \geq 0.9 \times PbmL \ \ldots \ (1),$$

where

Pj is the maximum tensile load (N/mm) per unit joining length of the butt joint, and
PbmL is a smaller value (N/mm) between the product of a tensile strength ($N/mm^2$) and a sheet thickness (mm) of the first steel sheet and the product of a tensile strength ($N/mm^2$) and a sheet thickness (mm) of the second steel sheet.

(e) Furthermore, in a case in which the thickness of the butt joint of the tailor welded blank is excessively thin compared to the thickness of the steel sheets, when the tailor welded blank is subjected to tensile deformation by press working, strain concentrates in the butt joint, especially in the stir zone, and cracking is likely to occur. In this respect, the concentration of strain in the butt joint can be reduced, and the occurrence of cracking can be effectively prevented, by satisfying the relationship according to the following formula (2).

$$TszL \geq 0.9 \times TbmL \ \ldots \ (2),$$

where

TszL is a minimum value (mm) of the thickness of the butt joint, and
TbmL is a value (mm) of the thinner one between the sheet thickness of the first steel sheet and the sheet thickness of the second steel sheet.

(f) Moreover, in a case in which the thickness of the butt joint of the tailor welded blank is excessively thick compared to the thickness of the steel sheets, when the tailor welded blank is subjected to bending deformation or bulging deformation by press working, strain concentrates in the butt joint, especially in the thermo-mechanically affected zones adjacent to the stir zone, and cracking is likely to occur. In this respect, the concentration of strain in the butt joint can be reduced, and the occurrence of cracking can be effectively prevented, by satisfying the relationship according to the following formula (3).

$$TszH \leq 1.1 \times TbmH \ \ldots \ (3),$$

where

TszH is a maximum value (mm) of the thickness of the butt joint, and
TbmH is a value (mm) of the thicker one between the sheet thickness of the first steel sheet and the sheet thickness of the second steel sheet. Additionally, when the thickness of the first steel sheet and the thickness of the second steel sheet are the same, TbmL = TbmH.

(g) Besides, it is important to appropriately control joining conditions of double-sided friction stir welding in order to produce a tailor welded blank that satisfies the aforementioned formulas (1) to (3) at the same time. Specifically, it is important

that the diameter D (mm) of shoulders of rotating tools satisfies the relationship according to the following formula (4), and
that RS $\times$ $D^3$/JS, which is expressed by the rotational speed RS (rotations/minute) of the rotating tools, the diameter D (mm) of the shoulders of the rotating tools, and joining speed JS (mm/minute), satisfies the relationship according to the following formula (5)

$$4 \times TJ \leq D \leq 10 \times TJ \ \ldots \ (4)$$

$$200 \times TJ \leq RS \times D^3/JS \leq 2000 \times TJ \ldots (5),$$

where TJ is an average value (mm) of the sheet thickness of the first steel sheet and the sheet thickness of the second steel sheet.

The present disclosure has been completed by further studies based on the above findings.
The primary features of the present disclosure are as follows.

1. A tailor welded blank comprising a first steel sheet, a second steel sheet, and a butt joint joining the first steel sheet and the second steel sheet, wherein

the butt joint includes a stir zone and thermo-mechanically affected zones adjacent to the stir zone,
the stir zone has an upper stir zone and a lower stir zone adjacent to each other in a thickness direction of the tailor welded blank, and
the relationships according to the following formulas (1) to (3) are satisfied,

$$Pj \geq 0.9 \times PbmL \ldots (1)$$

$$TszL \geq 0.9 \times TbmL \ldots (2)$$

$$TszH \leq 1.1 \times TbmH \ldots (3),$$

where
Pj is a maximum tensile load (N/mm) per unit joining length of the butt joint,
PbmL is a smaller value (N/mm) between a product of a tensile strength ($N/mm^2$) and a sheet thickness (mm) of the first steel sheet and a product of a tensile strength ($N/mm^2$) and a sheet thickness (mm) of the second steel sheet,
TszL is a minimum value (mm) of a thickness of the butt joint,
TszH is a maximum value (mm) of the thickness of the butt joint,
TbmL is a value (mm) of a thinner one between the sheet thickness of the first steel sheet and the sheet thickness of the second steel sheet, and
TbmH is a value (mm) of a thicker one between the sheet thickness of the first steel sheet and the sheet thickness of the second steel sheet.

2. The tailor welded blank according to the above item 1, wherein at least one of the sheet thickness of the first steel sheet and the sheet thickness of the second steel sheet is 2.5 mm or less.
3. The tailor welded blank according to the above item 1 or 2, wherein at least one of the tensile strength of the first steel sheet and the tensile strength of the second steel sheet is 980 MPa or more.
4. The tailor welded blank according to any one of the above items 1 to 3, wherein the sheet thickness of the first steel sheet and the sheet thickness of the second steel sheet are different.
5. A tailor welded blank production method including

pressing a pair of rotating tools facing each other into an unjoined portion, which is a butting portion between a first steel sheet and a second steel sheet, while rotating the rotating tools in opposite directions from each other from both sides of the unjoined portion, and
moving the rotating tools in a joining direction, to thereby join the first steel sheet and the second steel sheet and obtain a tailor welded blank, wherein
a diameter D (mm) of shoulders of the rotating tools satisfies the relationship according to the following formula (4), and
$RS \times D^3/JS$, which is expressed by a rotational speed RS (rotations/minute) of the rotating tools, the diameter D (mm) of the shoulders of the rotating tools, and joining speed JS (mm/minute), satisfies the relationship according to the following formula (5)

$$4 \times TJ \leq D \leq 10 \times TJ \ldots (4)$$

$$200 \times TJ \leq RS \times D^3/JS \leq 2000 \times TJ \ldots (5),$$

where TJ is an average value (mm) of a sheet thickness of the first steel sheet and a sheet thickness of the second steel sheet.

6. The tailor welded blank production method according to the above item 5, wherein at least one of the sheet thickness of the first steel sheet and the sheet thickness of the second steel sheet is 2.5 mm or less.
7. The tailor welded blank production method according to the above item 5 or 6, wherein at least one of a tensile strength of the first steel sheet and a tensile strength of the second steel sheet is 980 MPa or more.
8. The tailor welded blank production method according to any one of the above items 5 to 7, wherein the sheet thickness of the first steel sheet and the sheet thickness of the second steel sheet are different.
9. A tailor welded blank production apparatus to be used for producing the tailor welded blank according to any one of the above items 1 to 4.

(Advantageous Effects)

According to the present disclosure, the tailor welded blank with excellent press workability can be produced at low cost with high productivity, even when thin steel sheets are used as materials. Moreover, by applying the tailor welded blank according to the present disclosure, for example, as a material for structural parts of automobiles, the weight reduction of automotive bodies, and thus the reduction of $CO_2$ emissions can be more advantageously realized.

BRIEF DESCRIPTION OF THE DRAWINGS

In the accompanying drawings:

FIG. 1 is a schematic diagram illustrating an example of a section of a tailor welded blank according to an embodiment of the present disclosure;
FIG. 2 is a schematic view (perspective side view) illustrating an example of a tailor welded blank production method according to an embodiment of the present disclosure;
FIG. 3 is an A-A arrow view of FIG. 2;
FIG. 4 is a schematic diagram illustrating an example of a shape of a rotating tool used in the tailor welded blank production method according to an embodiment of the present disclosure; and
FIG. 5 is a schematic diagram illustrating an example of a shape of a rotating tool used in the tailor welded blank production method according to an embodiment of the present disclosure.

DETAILED DESCRIPTION

The present disclosure will be described based on the following embodiments.

Tailor welded blank

[1] First, a tailor welded blank according to an embodiment of the present disclosure will be described with reference to FIG. 1. FIG. 1 is a sectional view illustrating an example of the tailor welded blank according to an embodiment of the present disclosure in a thickness direction (wherein t1 = t2, where t1 is a sheet thickness [mm] of a first steel sheet, and t2 is a sheet thickness [mm] of a second steel sheet). In the figure, reference sign 1 represents the first steel sheet (joined material), 2 represents the second steel sheet (joined material), 4 represents a butt joint, 4-1 represents a stir zone, 4-2 represents an upper stir zone, 4-3 represents a lower stir zone, 4-4 represents a thermo-mechanically affected zone (on the first steel sheet), and 4-5 represents a thermo-mechanically affected zone (on the second steel sheet). Additionally, in the figure, a vertical direction is the thickness direction of the tailor welded blank (hereinafter, may be referred to simply as the thickness direction). A horizontal direction is a direction perpendicular to a joining direction and perpendicular to the thickness direction (hereinafter, may be referred to as a perpendicular-to-joining direction). A direction perpendicular to the plane of the figure is the joining direction. That is, the perpendicular-to-joining direction and the thickness direction are included in the plane (section in the thickness direction here) illustrated in FIG. 1. Although FIG. 1 illustrates an example wherein t1 = t2, the relationship between t1 and t2 may be t1 < t2 or t1 > t2.
A tailor welded blank according to an embodiment of the present disclosure is

a tailor welded blank including a first steel sheet, a second steel sheet, and a butt joint for the first steel sheet and the second steel sheet, wherein
the butt joint includes a stir zone and thermo-mechanically affected zones adjacent to the stir zone,
the stir zone has an upper stir zone and a lower stir zone adjacent to each other in the thickness direction, and
the tailor welded blank satisfies the relationships according to the aforementioned formulas (1) to (3).

[First Steel sheet and Second Steel sheet]

The first steel sheet and the second steel sheet are steel sheets to be used as joined materials.

The first steel sheet and the second steel sheet may include a component composition generally used in steel sheets without particular limitations. In an example, the component composition of the first steel sheet and the second steel sheet may contain, in mass%, C: 0.01 % to 0.70 %, Si: 0.01 % to 2.5 %, Al: 0.01 % to 2.5 %, Mn: 0.1 % to 3.5 %, P: 0.10 % or less, S: 0.05 % or less, and N: 0.02 % or less, with the balance being Fe and inevitable impurities. Additionally, the above component composition may optionally contain, in mass%, at least one selected from a group consisting of Cr: 1.0 % or less, Mo: 1.0 % or less, Ni: 1.0 % or less, Cu: 1.0 % or less, Sn: 0.05 % or less, Sb: 0.05 % or less, Ca: 0.02 % or less, REM: 0.05 % or less, and Mg: 0.02 % or less. Steel sheets including the above chemical composition can be produced through a common production method, such as hot rolling, cooling rolling, or other processes. The component composition of the first steel sheet and that of the second steel sheet may also be the same or different.

Furthermore, the first steel sheet and the second steel sheet may be steel sheets including a coated layer on the surface, which are so-called coated steel sheets. Examples of the coated layer may include a zinc-based (containing 50 mass% or more zinc) galvanized layer, such as hot-dip galvanized coating or galvannealing coating, and an aluminum-based (containing 50 mass% or more aluminum) aluminum-coated layer.

The sheet thickness of the first steel sheet and the second steel sheet is preferably 0.6 mm to 3.2 mm. At least one of the sheet thickness of the first steel sheet and the sheet thickness of the second steel sheet is preferably 2.5 mm or less, and more preferably less than 2.0 mm. In particular, both the sheet thickness of the first steel sheet and the sheet thickness of the second steel sheet is preferably 2.5 mm or less, and more preferably less than 2.0 mm.

Moreover, at least one of the tensile strength of the first steel sheet and the tensile strength of the second steel sheet is preferably 980 MPa or more. As mentioned above, in the laser welding method, as steel sheets as joined materials become stronger and more highly alloyed, cracking due to impurity segregation during melting and solidification (so-called solidification cracking) and cracking due to hydrogen intrusion (so-called hydrogen cracking) may occur. This tendency is evident when steel sheets with a tensile strength of 980 MPa or more are used as joined materials. Accordingly, in a case in which at least one of the tensile strength of the first steel sheet and the tensile strength of the second steel sheet is 980 MPa or more, especially in a case in which both the tensile strength of the first steel sheet and the tensile strength of the second steel sheet is 980 MPa or more, it is particularly advantageous to apply the double-sided friction stir welding method, which is a solid-state joining.

[Butt Joint]

The butt joint joining the first steel sheet and the second steel sheet includes a stir zone and thermo-mechanically affected zones adjacent to the stir zone.

Among these, the stir zone is an area which is affected by the frictional heat between rotating tools and joined materials and the plastic flow of the joined materials, resulting in a distinct microstructure from that of the steel sheets and a discontinuous structure from the later-described thermo-mechanically affected zones due to strain caused by the plastic flow of the joined materials.

The stir zone also has an upper stir zone and a lower stir zone adjacent to each other in the thickness direction. Here, the upper stir zone is a stir zone located on the upper side in the thickness direction in FIG. 1. The upper stir zone can be said to be formed by a rotating tool placed on the upper side in the vertical direction. Similarly, the lower stir zone is a stir zone located on the lower side in the thickness direction in FIG. 1. The lower stir zone can be said to be formed by a rotating tool placed on the lower side in the vertical direction.

The thermo-mechanically affected zones are placed adjacent to the stir zone, in particular, adjacent to and on outer sides of the stir zone. The thermo-mechanically affected zones are an area that has a distinct microstructure from that of the steel sheets due to the frictional heat between the rotating tools and the joined materials and the plastic flow of the joined materials.

The thermo-mechanically affected zones also encompass so-called heat-affected zones. Here, the heat-affected zones are an area that is not subject to strain due to the plastic flow of the joined materials, but has a distinct microstructure from that of the steel sheets due to the frictional heat between the rotating tools and the joined materials. That is, the thermo-mechanically affected zones usually include areas (hereinafter, may be referred to as the thermo-mechanically affected zones in the narrow sense) that are subject to strain due to the plastic flow of the joined materials, and the heat-affected zones that are not subject to strain due to the plastic flow. Additionally, in the perpendicular-to-joining direction centered on the stir zone, the stir zone, a thermo-mechanically affected zone in the narrow sense, a heat-affected zone, and a steel sheet are usually placed in this order.

Moreover, the stir zone, the thermo-mechanically affected zones (the thermo-mechanically affected zones in the narrow sense and the heat-affected zones), and the steel sheets are defined as follows.

That is, the tailor welded blank is cut in the sheet thickness (vertical) direction so that the plane illustrated in FIG. 1 (i.e., the plane including the perpendicular-to-joining direction and the thickness direction) forms the section. The section is then polished and etched with a saturated picric acid solution, nital (a solution of nitric acid and ethanol), or aqua regia (a solution of concentrated hydrochloric acid and concentrated nitric acid mixed in a 3:1 volume ratio). The section is then observed with an optical microscope, and from the degree of etching, shape, position, or the like, the stir zone (the upper stir zone and the lower stir zone), the thermo-mechanically affected zones, and the steel sheets are defined.

The stir zone and the thermo-mechanically affected zones can be determined by considering the following characteristics, for example.

The stir zone (SZ) is an area in which the macro (magnification: 5 times to 10 times) rolling structure of the steel sheets is greatly strained or the structure is segmented from the rolling structure due to the plastic flow of the joined materials. The stir zone has a micro (magnification: 100 times to 1000 times) structure that is distinct from that of the steel sheets due to heating and cooling during joining and processing at high temperatures. Additionally, in the stir zone, it can be confirmed that the upper stir zone (U-SZ) and the lower stir zone (L-SZ) are placed adjacent to each other in the thickness direction of the tailor welded blank, for example, from the direction of strain in the macro rolling structure.

In the thermo-mechanically affected zones, the thermo-mechanically affected zones (TMAZs) in the narrow sense exist adjacent to the stir zone, and these are an area in which strain due to the plastic flow of the joined materials is observed while continuity with the macro rolling structure of the steel sheets is maintained. The thermo-mechanically affected zones in the narrow sense have a distinct microstructure from that of the steel sheets due to heating and cooling during joining and processing at high temperatures.

In the thermo-mechanically affected zones, the heat-affected zones (HAZs) exist adjacent to and on outer sides (on the sides opposite to the stir zone) of the thermo-mechanically affected zones in the narrow sense, and these are an area that maintains continuity with the macro rolling structure of the steel sheets but do not present distortion due to the plastic flow of the joined materials. The heat-affected zones also have a distinct microstructure from that of the steel sheets due to heating and cooling during joining and processing at high temperatures.

In the tailor welded blank according to an embodiment of the present disclosure, it is important to satisfy the relationships according to the aforementioned formulas (1) to (3).

$$\mathrm{Pj} \geq 0.9 \times \mathrm{PbmL} \ \ldots \ (1)$$

When the tailor welded blank is subjected to tensile deformation by press working, strain tends to concentrate in the butt joint, especially in the thermo-mechanically affected zones, and cracking originated in these zones is likely to occur. In this respect, the occurrence of cracking originating in the butt joint can be effectively prevented, by satisfying the relationship according to the aforementioned formula (1). The relationship according to the aforementioned formula (1) is therefore to be satisfied. Pj is preferably 0.95 × PbmL or more, and more preferably 0.99 × PbmL or more. The upper limit of Pj is not particularly limited, but for example, Pj is preferably 1.00 × PbmL or less.

Here, Pj (N/mm) can be obtained as follows.

That is, a test piece of the same shape as the No. 1 test piece specified in JIS Z 3121 (2013) is collected from the tailor welded blank so that the longitudinal direction of the butt joint is perpendicular to the longitudinal direction of the test piece and the butt joint is located in the middle of parallel zones. Then, a tensile test in accordance with JIS Z 3121 (2013) is conducted using the collected test piece so as to determine the maximum test force (N). The value obtained by dividing the determined maximum test force (N) by the width (mm) of the parallel zones of the test piece is then used as Pj (N/mm).

Furthermore, the tensile strengths of the first steel sheet and the second steel sheet may be measured by tensile tests in accordance with JIS Z 2241 (2022). For example, a JIS No. 5 test piece is collected from each of the first steel sheet and the second steel sheet. Then, the collected test pieces are subjected to tensile tests at a crosshead speed of 10 mm/minute to measure the tensile strengths.

$$\mathrm{TszL} \geq 0.9 \times \mathrm{TbmL} \ \ldots \ (2)$$

Moreover, in a case in which the thickness of the butt joint of the tailor welded blank is excessively thin compared to the thickness of the steel sheets, when the tailor welded blank is subjected to tensile deformation by press working, strain concentrates in the butt joint, especially in the stir zone, and cracking is likely to occur. In this respect, the concentration of strain in the butt joint can be reduced, and the occurrence of cracking can be effectively prevented, by satisfying the relationship according to the aforementioned formula (2). The relationship according to the aforementioned formula (2) is therefore to be satisfied. TszL is preferably 0.95 × TbmL or more, and more preferably 0.99 × TbmL or more. The upper limit of TszL is not particularly limited, but for example, TszL is preferably 1.00 × TbmL or less.

$$TszH \leq 1.1 \times TbmH \ldots (3)$$

Moreover, in a case in which the thickness of the butt joint of the tailor welded blank is excessively thick compared to the thickness of the steel sheets, when the tailor welded blank is subjected to bending deformation or bulging deformation by press working, strain concentrates in the butt joint, especially in the thermo-mechanically affected zones adjacent to the stir zone, and cracking is likely to occur. In this respect, the concentration of strain in the butt joint can be reduced, and the occurrence of cracking can be effectively prevented, by satisfying the relationship according to the aforementioned formula (3). The relationship according to the aforementioned formula (3) is therefore to be satisfied. TszH is preferably 1.05 × TbmH or less, and more preferably 1.03 × TbmH or less. The lower limit of TszH is not particularly limited, but for example, TszH is preferably 1.00 × TbmH or more.

Additionally, TszL, TszH, TbmL, and TbmH can be measured, for example, as follows. That is, the tailor welded blank is cut in the sheet thickness (vertical) direction so that the plane illustrated in FIG. 1 (i.e., the plane including the perpendicular-to-joining direction and the thickness direction) forms the section. Then, TszL, TszH, TbmL, and TbmH are measured on the cut surface using a caliper or the like.

The tailor welded blank according to an embodiment of the present disclosure may also have another steel sheet joined to the first steel sheet and/or the second steel sheet. Additionally, a joint portion with another steel sheet may be configured by a butt joint as described above, or may be configured by another type of joint (such as a joint formed by a joining method other than double-sided friction stir welding).

[2] Tailor welded blank Production Method

Next, a tailor welded blank production method according to an embodiment of the present disclosure will be described.

The tailor welded blank production method according to an embodiment of the present disclosure includes joining the first steel sheet and the second steel sheet by double-sided friction stir welding, as described above.

More specifically, the tailor welded blank production method according to an embodiment of the present disclosure includes pressing a pair of rotating tools facing each other into an unjoined portion, which is a butting portion between the first steel sheet and the second steel sheet, while rotating the rotating tools in opposite directions from each other from both sides of the unjoined portion, and

moving the rotating tools in a joining direction, to thereby join the first steel sheet and the second steel sheet and obtain a tailor welded blank.

First, the first steel sheet and the second steel sheet to be used as joined materials are prepared. For example, steel sheets (or steel strips) are cut in accordance with the target shape to prepare the first steel sheet and the second steel sheet to be used as the joined material. The cutting method is not particularly limited, and shear cutting and laser cutting are examples. While shear cutting is inferior to laser cutting in terms of butt accuracy, it is very advantageous in terms of productivity and production cost. Shear cutting is therefore preferred. Cutting conditions are not particularly limited, and ordinary procedures can be followed.

Next, the first steel sheet and the second steel sheet prepared as described above are butted together, and especially cut surfaces of both of them are butted together, and double-sided friction stir welding is performed.

Double-sided friction stir welding uses, for example, a double-sided friction stir welding device including a pair of rotating tools facing each other, a driving unit for the rotating tools, a gripping unit, and a control unit that controls operations of the rotating tools. The control unit controls, for example, the inclination angle $\alpha$ of the rotating tools, the positions of tip portions of the rotating tools and the distance between the tip portions (probes) (hereinafter, may be referred to as the gap between the probes), the gap between shoulders of the rotating tools (i.e., the distance in the thickness direction between the shoulder of the rotating tool on the front side and the shoulder of the rotating tool on the back side), joining speed, pressure load, the rotational speed of the rotating tools, rotational torque, or the like.

Then, as illustrated in FIG. 2 and FIG. 3, the pair of rotating tools facing each other is pressed into an unjoined portion including end surfaces (butting surfaces) of the first steel sheet and the second steel sheet, while rotating the rotating tools in opposite directions from each other from both sides of the unjoined portion. Then, in this state, the rotating tools are moved in the joining direction, to thereby join the first steel sheet and the second steel sheet. FIG. 2 is a perspective side view, and FIG. 3 is an A-A arrow view of FIG. 2. In the figure, reference sign 1 represents the first steel sheet (joined material), 2 represents the second steel sheet (joined material), 3-1 represents a rotating tool (rotating tool on the front side), 3-2 represents a rotating tool (rotating tool on the back side), 4 represents the butt joint (joined portion), 5-1 and 5-2 represent the shoulders, 6-1 and 6-2 represent the probes (pins), 7 represents the gripping unit, and 9-1 and 9-2 represent the tip portions. Additionally, in FIG. 2, the gripping unit is omitted. Furthermore, in FIG. 3, the vertical direction is the thickness direction, the horizontal direction is the perpendicular-to-joining direction, and the direction toward the reader is the joining direction.

In double-sided friction stir welding, the rotating tools of the friction stir welding device are placed on both sides of the first steel sheet and the second steel sheet, which are joined materials. Additionally, the rotating tool placed on the front side (on the upper side in the vertical direction) of the first steel sheet and the second steel sheet may be referred to as the rotating tool on the front side, and the rotating tool placed on the back side (on the lower side in the vertical direction) of the first steel sheet and the second steel sheet may be referred to as the rotating tool on the back side. The first steel sheet and the second steel sheet are placed so that they are parallel to the joining center line illustrated in the figure, and each is gripped by the gripping unit. Then, the rotating tools are rotated and pressed into an unjoined portion (area to be joined) located on the joining center line, that is, into both sides of the butting portion between an end portion of the first steel sheet and an end portion of the second steel sheet. In this state, subsequently, the rotating tools are moved in the joining direction. This causes the frictional heat between the rotating tools and the first steel sheet and the second steel sheet, which are the joined materials, and the joined materials are softened. The softened part is then stirred by the rotating tools to generate plastic flow, to thereby join the first steel sheet and the second steel sheet, which are the joined materials. A butt joint (jointed portion) is formed at the portion in which the joining is completed. In the butt joint, thermo-mechanically affected zones are placed adjacent to the stir zone. In the butt joint formed by double-sided stir joining, the stir zone has an upper stir zone formed by the rotating tool on the front side and a lower stir zone formed by the rotating tool on the back side. The upper stir zone and the lower stir zone are adjacent to each other in the thickness direction.

Thus, in the tailor welded blank production method according to an embodiment of the present disclosure, the aforementioned double-sided friction stir welding is applied as a joining method. Moreover, the following is important.

The diameter D (mm) of the shoulders of the rotating tools satisfies the relationship according to the aforementioned formula (4), and

$RS \times D^3/JS$, which is expressed by the rotational speed RS (rotations/minute) of the rotating tools, the diameter D (mm) of the shoulders of the rotating tools, and joining speed JS (mm/minute), satisfies the relationship according to the aforementioned formula (5). In this way, a tailor welded blank that satisfies the aforementioned relationships (1) to (3) at the same time is produced.

$$4 \times TJ \leq D \leq 10 \times TJ \ \ldots \ (4)$$

By appropriately controlling the diameter D of the shoulders of the rotating tools (hereinafter, may be simply referred to as the shoulder diameter D) in accordance with the thickness of the unjoined portion, a temperature rise due to frictional heat and shear stress due to the frictional force can be effectively given to the joined materials. Here, when the shoulder diameter D is less than $4 \times TJ$ (mm), sufficient material flow may not be obtained. On the other hand, when the shoulder diameter D exceeds $10 \times TJ$ (mm), an area in which material flow occurs expands unnecessarily, and an excessive amount of heat is applied to the joined portion (butt joint). This leads to a reduction in the strength of the joined portion. As a result, it becomes impossible to obtain a tailor welded blank that satisfies the aforementioned formulas (1) to (3) at the same time. The shoulder diameter D is therefore to satisfy the aforementioned relationship (4).

$$200 \times TJ \leq RS \times D^3/JS \leq 2000 \times TJ \ \ldots \ (5)$$

$RS \times D^3/JS$ is a parameter that correlates with the amount of heat generated per unit joining length. By setting the range of $RS \times D^3/JS$ to $200 \times TJ$ to $2000 \times TJ$, a temperature rise due to frictional heat and shear stress due to the frictional force can be effectively given to the joined materials. Here, when $RS \times D^3/JS$ is less than $200 \times TJ$, the amount of heat generated may be insufficient. This may make it impossible to form a joining interface in a metallurgically joined state at mating surfaces of the first steel sheet and the second steel sheet, and it may be difficult to satisfy predetermined relationships. On the other hand, when $RS \times D^3/JS$ exceeds $2000 \times TJ$, the amount of heat generated by friction stir becomes excessive, and an excessive amount of heat is applied into the joined portion. As a result, the peak temperature (maximum temperature attained) of the joined portion rises, and the cooling rate decreases, resulting in a decrease in the strength of the joined portion. Consequently, it becomes impossible to obtain a tailor welded blank that satisfies the aforementioned formulas (1) to (3) at the same time. Accordingly, from the viewpoint of realizing conditions that satisfy predetermined relationships, it is preferable that $RS \times D^3/JS$ satisfy the relationship according to the aforementioned formula (5). $RS \times D^3/JS$ is more preferably $280 \times TJ$ or more. $RS \times D^3/JS$ is also more preferably $1600 \times TJ$ or less.

Additionally, when the rotational speed RS and the shoulder diameter D of the rotating tool on the front side are different from those of the rotating tool on the back side, the relationships according to the aforementioned formulas (4) and (5) are to be satisfied for each of the rotating tool on the front side and the rotating tool on the back side.

Moreover, in the tailor welded blank production method according to an embodiment of the present disclosure,

the inclination angle $\alpha$ of the rotating tools preferably satisfies the relationship according to the following formula (6).

$$0° < \alpha \leq 2° \ldots (6)$$

Here, $\alpha$ is the inclination angle of the rotation axes of the rotating tools (hereinafter, may be also referred to as the rotation axes of the tools) from the thickness direction (direction perpendicular to the surfaces of the joined materials) in the plane including the joining direction and the thickness direction (direction perpendicular to the surfaces of the joined materials). Additionally, a direction (angle) in which the tip portions of the rotating tools proceed with respect to the joining direction is +.

That is, the rotating tools are formed of a material harder than the joined materials. However, in rotating tools made of a material with poor toughness, such as ceramic, when the probes are loaded with force in a bending direction, stress is concentrated locally, and this may lead to fractures. In this respect, by inclining the rotation axis of each tool at $\alpha$ (°) from the thickness direction and making the tip of the probe proceed with respect to the joining direction, load on the rotating tool can be received by the rotating tool as component force compressed in the direction of the rotation axis. This reduces force in the bending direction and avoids fractures of the rotating tools.

Here, when the inclination angle $\alpha$ of the rotating tools exceeds 0°, the aforementioned advantageous effects can be obtained. However, when the inclination angle $\alpha$ of the rotating tools exceeds 2°, the front side and the back side of the butt joint tend to become concave. As a result, the minimum value of the thickness of the butt joint tends to decrease relative to the thickness of the steel sheets. Consequently, joint strength is adversely affected, and press workability may be decreased. Accordingly, the inclination angle $\alpha$ of the rotating tool is preferably set to the range $0° < \alpha \leq 2°$ for both the rotating tool on the front side and the rotating tool on the back side.

Furthermore, in the tailor welded blank production method according to an embodiment of the present disclosure, it is preferable that the gap G (mm) between the shoulders of the rotating tools satisfy the relationship according to the following formula (7).

$$0.5 \times TJ - 0.1 \times D \times \sin\alpha \leq G \leq 0.9 \times TJ - 0.1 \times D \times \sin\alpha \ldots (7)$$

In double-sided friction stir welding, it is advantageous to control the gap G between the shoulders of the rotating tools (hereinafter, may be simply referred to as the shoulder gap G) appropriately from the viewpoint of increasing the joining speed while preventing the occurrence of defects during joining. The shoulder gap G can also be referred to as the interval between the shoulder of the rotating tool on the front side and the shoulder of the rotating tool on the back side in the thickness direction. In particular, when the shoulder gap G is within the range of $0.5 \times TJ - 0.1 \times D \times \sin\alpha$ to $0.9 \times TJ - 0.1 \times D \times \sin\alpha$, the shoulders of the rotating tools facing each other are in close contact with or pushed against the front side and the back side of the joined materials. As a result, the joined materials are pressed by the shoulders of the rotating tools from the front side and the back side with sufficient load, which is advantageous in increasing the joining speed while preventing the occurrence of defects during joining. Accordingly, it is preferable that the shoulder gap G be in the range of $0.5 \times TJ - 0.1 \times D \times \sin\alpha$ to $0.9 \times TJ - 0.1 \times D \times \sin\alpha$.

Conditions other than the above are not particularly limited as long as a tailor welded blank that satisfies the relationships according to the aforementioned formulas (1) to (3) at the same time can be obtained, and ordinary procedures can be followed.

For example, the rotational speed of the rotating tools is preferably 300 rotations/minute to 9000 rotations/minute. It is advantageous to set the rotational speed of the rotating tools within this range, because deterioration in mechanical properties due to excessive heat input can be prevented, while a good surface shape is maintained. The rotational speed of the rotating tools is more preferably 400 rotations/minute or more. The rotational speed of the rotating tools is also more preferably 8000 rotations/minute or less.

The joining speed is preferably 800 mm/minute to 5000 mm/minute. The joining speed is more preferably 1000 mm/minute or more. The joining speed is even more preferably 4000 mm/minute or less.

The position of the tip portion of each rotating tool, pressure load, rotation torque, and the gap between the probes can be set as appropriate in accordance with ordinary procedures.

Additionally, it is preferable that the rotation direction of the rotating tool on the front side and the rotation direction of the rotating tool on the back side be opposite when viewed from the front side (or the back side) of the joined materials, and that the rotational speeds be the same. This allows the rotation torques applied to the joined materials from the rotating tool on the front side and the rotating tool on the back side to cancel out each other. As a result, the configuration of a jig that restrains the joined materials can be simplified compared to the one-sided friction stir welding method in which an unjoined portion is pressed from one side for joining.

Furthermore, when the rotation direction of the rotating tool on the front side and the rotation direction of the rotating tool on the back side are the same when viewed from the front side (or the back side) of the joined materials, the relative speed of one rotating tool to the other rotating tool approaches zero. As a result, the plastic flow of the joined materials approaches a homogeneous state, and plastic deformation is decreased. This makes it difficult to achieve a good joining state, because heat generation due to plastic deformation of the materials is not obtained. Accordingly, from the viewpoint of obtaining a temperature rise and shear stress sufficient to achieve a good joining state homogeneously in the thickness direction of the joined materials, the rotation direction of the rotating tool on the front side and that of the rotating tool on the back side are to be opposite when viewed from the front side (or the back side) of the joined materials.

The rotating tools used in the tailor welded blank production method according to an embodiment of the present disclosure are also not particularly limited, as long as a tailor welded blank that satisfies the relationships according to the aforementioned formulas (1) to (3) at the same time can be obtained.

For example, the tip portions of the rotating tools contact the first steel sheet and the second steel sheet, which are the joined materials, during joining. Accordingly, the tip portions of the rotating tools are formed of a material harder than the first steel sheet and the second steel sheet in a high temperature state to which they are exposed during joining. This allows the rotating tools to deform the first steel sheet and the second steel sheet during joining while maintaining the shape of the tip portions. As a result, a high stirring capacity can be achieved continuously, enabling appropriate joining. Additionally, the hardness of the tip portions of the rotating tools, the first steel sheet, and the second steel sheet can be measured and compared by the high-temperature Vickers hardness test method. Furthermore, only the tip portions of the rotating tools may be formed of a material harder than the first steel sheet and the second steel sheet. The entire rotating tools may be formed of a material harder than the first steel sheet and the second steel sheet.

FIG. 4 and FIG. 5 illustrate examples of the rotating tools used in the tailor welded blank production method according to an embodiment of the present disclosure. In the figures, reference sign 5 represents a shoulder, 6 represents a probe, and 8 represents an outer peripheral portion. As illustrated in FIG. 4 and FIG. 5, each rotating tool includes a tip portion, which has a shoulder (in the range indicated by the shoulder diameter in the figure) and a probe (in the range indicated by the probe diameter in the figure) that is located on the shoulder and that shares a rotation axis with the shoulder.

In the example of the rotating tool of FIG. 4, the shape of the rotating tool is as follows: tool diameter: 25 mm; probe diameter: 4 mm; shoulder diameter: 12 mm; width of outer peripheral portion: 6.5 mm; probe length: 0.2 mm; and taper angle $\theta$ of outer peripheral portion: 15°.

In the example of the rotating tool of FIG. 5, the shape of the rotating tool is as follows: tool diameter: 25 mm; probe diameter: 6.7 mm; shoulder diameter: 20 mm; width of outer peripheral portion: 2.5 mm; probe length: 0.7 mm; and taper angle $\theta$ of outer peripheral portion: 15°.

A tip portion of a typical rotating tool includes a shoulder and a probe. The shoulder presents a flat shape formed by a substantially flat surface or a gently curved surface. The shoulder also has the function of generating frictional heat by contacting a first steel sheet and a second steel sheet while rotating during joining. The shoulder also has the function of preventing materials from separating and promoting plastic flow in a rotation direction by pressing a part softened by heat. The probe has a shape that is discontinuous with the shoulder and that protrudes substantially perpendicularly toward joined materials (not shown). The probe has the function of improving stirring capacity in the vicinity of a central portion of the thickness by penetrating in the thickness direction in the softened portion of the first steel sheet and the second steel sheet during joining. The probe is usually located at the center of the shoulder.

The shoulder diameter D (mm) is to satisfy the relationships according to the aforementioned formulas (4) and (5). A pin diameter and a pin length of each rotating tool are also not particularly limited and can be set as appropriate in accordance with ordinary procedures. For example, in a case in which the first steel sheet and the second steel sheet of different thicknesses are butt-joined, the pin diameter and the pin length of each rotating tool can be set in accordance with ordinary procedures by considering an average value of the sheet thickness of the first steel sheet and the sheet thickness of the second steel sheet.

Moreover, in a case in which the first steel sheet and the second steel sheet to be used as joined materials have different sheet thicknesses, as illustrated in FIG. 4 and FIG. 5, it is preferable to use rotating tools including a tip portion that further has an outer peripheral portion adjacent to the periphery of the shoulder, wherein the outer peripheral portion is tapered in shape.

In friction stir welding, the rotating tools penetrate to the vicinity of the center of the thickness direction in a portion in which joined materials are softened during joining. Here, in a case in which joined materials with different sheet thicknesses are butt-joined, a difference in level is generated on at least one side of the joined materials. In order to smooth out this difference in level when the rotating tools pass through, measures, such as inclining the rotation axes of the rotating tools in the perpendicular-to-joining direction (especially toward the joined material with a smaller sheet thickness), are necessary. However, in a case in which joined materials are high strength steel sheets, especially those with a tensile strength of 980 MPa or more, it may be difficult to form an appropriate bead because of large load generated by the inclination of the rotating tools in the perpendicular-to-joining direction. There are also problems, such as damage to the rotating tools or the need for extremely high rigidity of the device in which the rotating tools are installed.

In this respect, by making the outer peripheral portion placed adjacent to the periphery of each shoulder tapered in shape, even when the rotation axis of the rotating tool is not inclined toward the perpendicular-to-joining direction, the difference in level between the joined materials is smoothed out when the rotating tool passes through, and an appropriate bead is formed. As a result, even when the sheet thicknesses of the first steel sheet and the sheet thicknesses of the second steel sheet differ from each other, an appropriate bead and thus, a tailor welded blank that satisfies the aforementioned formulas (1) to (3) can be obtained. At the same time, the joining speed can also be increased.

Here, the outer peripheral portion is defined as an area (doughnut-shaped area) from the periphery of the shoulder of the rotating tool to an end portion in the circumferential direction of the rotating tool at the tip portion of the rotating tool. The width of the outer peripheral portion is preferably in the range of rotating tool diameter (mm) $\times$ 0.05 to rotating tool diameter (mm) $\times$ 0.35.

Moreover, from the viewpoint of obtaining the aforementioned advantageous effects, the taper angle $\theta$ of the outer peripheral portion is preferably 2° to 45°. Here, when the taper angle $\theta$ of the outer peripheral portion is less than 2°, the ability of the rotating tool to smooth out the difference in level between the joined materials when it passes through may be decreased. Besides, the risk of damage to the rotating tool increases due to high stress applied to the outer peripheral portion of the rotating tool. On the other hand, when the taper angle $\theta$ of the outer peripheral portion is more than 45°, the contact area between the outer peripheral portion and the joined materials decreases. This may result in a decrease in joining capability. It is therefore preferable to set the taper angle $\theta$ of the outer peripheral portion to 2° to 45°. The taper angle $\theta$ of the outer peripheral portion is more preferably 8° or more. The taper angle $\theta$ of the outer peripheral portion is also more preferably 20° or less.

Here, the taper angle $\theta$ of the outer peripheral portion is an angle between the straight line connecting the periphery of the shoulder of the rotating tool and the end portion in the circumferential direction of the rotating tool and the straight line perpendicular to the rotation axis in the section of the rotating tool viewed from the side (section that includes the rotation axis and that is parallel to the rotation axis). The shape of the outer peripheral portion in the section (section that includes the rotation axis and that is parallel to the rotation axis) of a tip surface is not particularly limited. Examples of the shape of the outer peripheral portion in the section of the tip surface may include a straight line (line segment) or a continuous curve, among which a straight line (line segment) is preferred.

Conditions other than those described above are not particularly limited, and ordinary procedures can be followed.

[3] Tailor welded blank Production Apparatus

Next, a tailor welded blank production apparatus according to an embodiment of the present disclosure will be described.

The tailor welded blank production apparatus according to an embodiment of the present disclosure is used to produce the tailor welded blank as described in **[1]** above. Examples of the tailor welded blank production apparatus according to an embodiment of the present disclosure may include a production apparatus including a double-sided friction stir welding device, and a production apparatus including a steel sheet cutting device and a double-sided friction stir welding device.

The steel sheet cutting device, which can cut steel sheets into desired shapes to obtain joined materials (a first steel sheet and a second steel sheet), may be in any mode without particular limitations. Examples of such steel sheet cutting device may include a shear cutting machine. The shear cutting machine is very advantageous in terms of productivity and production cost compared to a laser cutting machine or the like. The shear cutting machine includes, for example, a punch (upper blade), a punch (lower blade), and a driving unit for the punch. The driving unit may include any driving system without particular limitations, and, for example, an electric driving system can be used.

The double-sided friction stir welding device may also be in any mode without particular limitations.

For example, the double-sided friction stir welding device may include:

a gripping unit configured to grip joined materials;
a pair of rotating tools facing each other; and
a driving unit configured to allow the rotating tools to rotate and move in a joining direction.

In one mode, for example, the gripping unit may include:

a movable gripping member; and a slide unit for the movable gripping member, or
a fixed gripping member; a movable gripping member; and a slide unit for the movable gripping member.

The mode of the rotating tools may be as illustrated in [2] above.

In one mode, for example, the driving unit for the rotating tools may include a rotational driving unit for the rotating tools and a moving unit for the rotating tools in the joining direction. The rotational driving unit and the moving unit may include any driving system without particular limitations, and for example, an electric driving system can be used.

The double-sided friction stir welding device may further include a control unit that controls operations of the gripping unit and/or the driving unit for the rotating tools. In one mode, for example, the control unit may include an input unit through which data, such as various setting values, are input, an arithmetic unit configured to perform arithmetic processing on the input data, a memory unit that stores data or the like, and an output unit configured to output operation signals to the gripping unit and the driving unit for the rotating tools based on results of the arithmetic processing in the arithmetic unit. The control unit controls, for example, the inclination angle $\alpha$ of the rotating tools, the positions of tip portions of the rotating tools and the gap between the probes, the gap between shoulders of the rotating tools, joining speed, pressure load, the rotational speed of the rotating tools, rotational torque, or the like.

Device configurations other than those described above are not particularly limited, and conventionally known device configurations may be adopted as appropriate.

EXAMPLES

Functions and advantageous effects of the present disclosure will be described below with reference to Examples. Note that the present disclosure is not limited to the following Examples.

Steel sheets each having a sheet thicknesses and a component composition (with the balance being Fe and inevitable impurities) presented in Table 1 were cut to a size of 0.2 m $\times$ 0.5 m using a shear cutting machine, so as to prepare first steel sheets and second steel sheets to be used as joined materials. Then, long sides of cut surfaces of the first steel sheets and the second steel sheets were butted together according to the combinations presented in Table 2, and using these as joined materials, tailor welded blanks were produced by double-sided friction stir welding under the conditions presented in Table 2. The joining length was 0.5 m for all of them. Here, grooves were a so-called I-type groove with no groove angle on end surfaces of two steel sheets as join materials. Table 1 also presents tensile strengths, Vickers hardness, and Erichsen values of the steel sheets used as the first steel sheets and second steel sheets. Here, the tensile strength was measured by the aforementioned method. The Erichsen values are values measured in accordance with the Erichsen test method specified in JIS Z 2247 (2022). Additionally, conditions not specified were set in accordance with ordinary procedures.

In the aforementioned double-sided friction stir welding, as illustrated in FIG. 2, the rotation direction of the rotating tool on the front side, which was placed on the upper side in the vertical direction, was rotated clockwise when viewed from the upper side in the vertical direction, and the rotating tool on the back side, which was placed on the lower side in the vertical direction, was rotated counterclockwise when viewed from the upper side in the vertical direction. That is, both were rotated counterclockwise when tip portions of the respective rotating tools were viewed from the front. Either one of the rotating tools with the sectional dimensions and the shapes illustrated in FIG. 4 and FIG. 5 was used. The rotating tool on the front side and the rotating tool on the back side had the same sectional dimension and shape. Both of these rotating tools were made of tungsten carbide (WC) with a Vickers hardness of HV 1090, which was harder than the joined materials.

Subsequently, butt joints of the produced tailor welded blanks were observed according to the aforementioned procedures, and stir zones and thermo-mechanically affected zones were defined. As illustrated in FIG. 1, the butt joint of each tailor welded blank produced included a stir zone and thermo-mechanically affected zones. The stir zone also had an upper stir zone and a lower stir zone adjacent to each other in the thickness direction. The thermo-mechanically affected zones included thermo-mechanically affected zones in the narrow sense and heat-affected zones. Then, Pj (N/mm), TszL (mm), and TszH (mm) were obtained for the produced tailor welded blanks according to the aforementioned procedures. These results are also presented in Table 3, together with Pj (N/mm), TbmL (mm), and TbmH (mm). Table 3 also presents break positions when the maximum test force (N) was applied in the tensile tests in accordance with JIS Z 3121 (2013) conducted when determining Pj. For Comparative Example 4, the measurements of TszL (mm) and TszH (mm) were omitted because significant surface defects were identified in the following identification of (I) presence of surface defects.

Furthermore, the produced tailor welded blanks were subjected to identification of (I) presence of surface defects, identification of (II) presence of internal defects, and (III) Erichsen test according to the following procedures. In a case in which they passed all of the tests (I) through (III) and in a case in which the break position when the maximum test force (N) was applied in the tensile test in accordance with JIS Z 3121 (2013) described above was in the first steel sheet or the second steel sheet (i.e., in a case in which the break position was not in the butt joint [joined portion], that is, the stir zone [SZ], the thermo-mechanically affected zones [TMAZs] in the narrow sense, and the heat-affected zones [HAZs]), the materials were evaluated to have excellent press workability. On the other hand, in cases other than the above, the press workability was evaluated as inadequate.

The results are also presented in Table 3. In a case in which significant defects were identified in (I) and/or (II), the subsequent evaluation was omitted.

(I) Presence of surface defects

The presence of surface defects was identified in a steady-state portion of the butt joint of each tailor welded blank. Here, the presence of surface defects was checked by visually identifying the presence of a groove-shaped unjoined state due to insufficient plastic flow (hereinafter, may be referred to as an "unjoined state") and a concave portion in the butt joint (hereinafter, may be referred to as a "concave portion"). Subsequently, in a case in which an unjoined state and a concave shape as above were identified, the depths $D_d$ (mm) were measured with a laser displacement meter. The presence of surface defects was then determined according to the following criteria. The evaluation results are also presented in Table 3. Additionally, the steady-state portion here refers to an area in which joining was performed in a state in which the joining speed had reached a set value. Normally, in the joining direction, a range of 25 mm from an end portion of a tailor welded blank on a joining starting side to 25 mm from an end portion of a tailor welded blank on a joining ending side is a steady state portion. The end portion here refers to an end portion in the joining direction, and the same applies hereafter.

<Determination Criteria>

No defects (Pass, particularly excellent): Neither an unjoined state nor a concave portion was identified
With minor defects (Pass): Either an unjoined state or a concave portion was identified, but $D_d$/TbmL of the defect was 0.1 or less in either case
With significant defects (Fail): An unjoined state with $D_d$/TbmL exceeding 0.1, a concave portion with $D_d$/TbmL exceeding 0.1, and/or an unjoined state that penetrates from the front side to the back side was identified

(II) Presence of internal defects

The presence of internal defects was identified in a steady-state portion of the butt joint of each tailor welded blank. Specifically, each tailor welded blank was cut in the sheet thickness (vertical) direction so that the plane illustrated in FIG. 1 (i.e., the plane including the perpendicular-to-joining direction and the thickness direction) became a plane to be observed, and three test pieces were collected. Additionally, the cutting positions (planes to be observed) in the joining direction were 20 mm from an end portion of the steady-state portion on the joining starting side, 20 mm from an end portion of the steady-state portion on the joining ending side, and a middle position of the steady-state portion, and the test pieces were collected so that cut surfaces at the cutting positions became planes to be observed. The planes of the test pieces to be observed were then observed with an optical microscope (magnification: 10×). The presence of internal defects was determined according to the following criteria.

<Determination Criteria>

No defects (Pass, particularly excellent): A tunnel-like unjoined state was observed in none of the three test pieces
With minor defects (Pass): A tunnel-like unjoined state was observed in one of the three test pieces
With significant defects (Fail): A tunnel-like unjoined state was observed in two or more of the three test pieces

(III) Erichsen test

The Erichsen values of tailor welded blanks were measured in accordance with the Erichsen test method specified in JIS Z 2247 (2022). Specifically, a test piece was collected from a substantially central position of each tailor welded blank so that the butt joint was included. Then, an Erichsen testing machine was used to measure the height of plastic deformation up to the point of crack initiation at the butt joint of the test piece, that is, the Erichsen value. The measured Erichsen value was divided by the Erichsen value of a steel sheet closer to the crack initiation position and multiplied by 100, so as to calculate the ratio of Erichsen value. The calculated ratio of Erichsen value was then used to determine pass or fail according to the following criteria. Erichsen values, crack initiation positions, and the ratios of Erichsen values are also presented in Table 3.

Pass: Ratio of Erichsen value was 85 % or more
Fail: Ratio of Erichsen ratio was less than 85 %

[Table 1]

Table 1

| Steel sheet No. | Sheet thickness (mm) | Component composition (mass%) | | | | | Tensile strength (MPa) | Vickers hardness HV | Erichsen value (mm) |
|---|---|---|---|---|---|---|---|---|---|
| | | C | Si | Mn | P | S | | | |
| 1 | 1.2 | 0.32 | 0.14 | 0.68 | 0.023 | 0.002 | 1206 | 401 | 11.9 |
| 2 | 1.4 | 0.34 | 0.18 | 0.62 | 0.017 | 0..004 | 1512 | 498 | 10.3 |
| 3 | 1.6 | 0.30 | 0.21 | 0.69 | 0.012 | 0.003 | 1010 | 337 | 13.2 |
| 4 | 1.8 | 0.30 | 0.21 | 0.69 | 0.012 | 0.003 | 1010 | 337 | 13.6 |
| 5 | 2.4 | 0.16 | 0.08 | 0.68 | 0.015 | 0.009 | 596 | 143 | 16.3 |

[Table 2]

Table 2

| | Joined material | | | | | Rotating tool | | | Joining conditions | | | | | | |
|---|---|---|---|---|---|---|---|---|---|---|---|---|---|---|---|
| | First steel sheet | | Second steel sheet | | TJ (mm) | Shape | Shoulder diameter D (mm) | Formula (4) | Inclination angle a (°) | Shoulder gap G (mm) | Rotational speed RS (rotations/minute) | | Joining speed is (mm/minute) | **RS** × $D^3$/JS | Formula (5) |
| | Steel sheet No. | Sheet thickness t1 (mm) | Steel sheet No. | Sheet thickness t2 (mm) | | | | | | | Front side | Back side | | | |
| Example 1 | 3 | 1.6 | 3 | 1.6 | 1.6 | FIG. 4 | 12 | Satisfied | 0.5 | 1.1 | 1600 | 1600 | 3000 | 922 | Satisfied |
| Example 2 | 5 | 2.4 | 5 | 2.4 | 2.4 | FIG. 5 | 20 | Satisfied | 0.5 | 1.9 | 800 | 800 | 2000 | 3200 | Satisfied |
| Example 3 | 4 | 1.8 | 1 | 1.2 | 1.5 | FIG. 4 | 12 | Satisfied | 1.5 | 0.8 | 1500 | 1500 | 3000 | 864 | Satisfied |
| Example 4 | 4 | 1.8 | 1 | 1.2 | 1.5 | FIG. 4 | 12 | Satisfied | 1.0 | 0.8 | 1000 | 1000 | 2000 | 864 | Satisfied |
| Example 5 | 2 | 1.4 | 1 | 1.2 | 1.3 | FIG. 4 | 12 | Satisfied | 0.5 | 0.8 | 1500 | 1500 | 3000 | 864 | Satisfied |
| Comparative Example 1 | 3 | 1.6 | 3 | 1.6 | 1.6 | FIG. 5 | 20 | Unsatisfied | 0.5 | 1.1 | 300 | 300 | 800 | 3000 | Satisfied |
| Comparative Example 2 | 5 | 2.4 | 5 | 2.4 | 2.4 | FIG. 4 | 12 | Satisfied | 0.5 | 1.1 | 300 | 300 | 1200 | 432 | Unsatisfied |
| Comparative Example 3 | 4 | 1.8 | 1 | 1.2 | 1.5 | FIG. 5 | 20 | Unsatisfied | 1.5 | 0.8 | 500 | 500 | 800 | 5000 | Unsatisfied |
| Comparative Example 4 | 4 | 1.8 | 1 | 1.2 | 1.5 | FIG. 4 | 12 | Satisfied | 1.0 | 1.1 | 300 | 300 | 2000 | 259 | Unsatisfied |
| Comparative Example 5 | 2 | 1.4 | 1 | 1.2 | 1.3 | FIG. 5 | 20 | Unsatisfied | 0.5 | 0.8 | 600 | 600 | 900 | 5333 | Unsatisfied |

[Table 3]

Table 3

| | Tailor welded blank | | | | | | | | | | | | | | | | | | | |
|---|---|---|---|---|---|---|---|---|---|---|---|---|---|---|---|---|---|---|---|---|
| | First steel sheet | | | | | Second steel sheet | | | | | PbmL (N/mm) | Pj (N/mm) | Formula (1) | TbmL (mm) | TszL (mm) | **Formula** (2) | TbmH (mm) | TszH (mm) | Formula (3) |
| | Steel sheet No. | Tensile strength ($N/mm^2$) | Sheet thickness (mm) | Tensile strength × sheet thickness (N/mm) | Erichsen value (mm) | Steel sheet No. | Tensile strength ($N/mm^2$) | Sheet thickness (mm) | Tensile strength × sheet thickness (N/mm) | Erichsen value (mm) | | | | | | | | | |
| Example 1 | 3 | 1010 | 1.6 | 1616.0 | 13.2 | 3 | 1010 | 1.6 | 1616.0 | 13.2 | 1616.0 | 1611.2 | Satisfied | 1.6 | 1.5 | Satisfied | 1.6 | 1.6 | Satisfied |
| Example 2 | 5 | 596 | 2.4 | 1430.4 | 16.3 | 5 | 596 | 2.4 | 1430.4 | 16.3 | 1430.4 | 1430.4 | Satisfied | 2.4 | 2.3 | Satisfied | 2.4 | 2.5 | Satisfied |
| Example 3 | 4 | 1010 | 1.8 | 1818.0 | 13.6 | 1 | 1206 | 1.2 | 1447.2 | 11.9 | 1447.2 | 1411.2 | Satisfied | 1.2 | 1.2 | Satisfied | 1.8 | 1.8 | Satisfied |
| Example 4 | 4 | 1010 | 1.8 | 1818.0 | 13.6 | 1 | 1206 | 1.2 | 1447.2 | 11.9 | 1447.2 | 1395.6 | Satisfied | 1.2 | 1.2 | Satisfied | 1.8 | 1.8 | Satisfied |
| Example 5 | 2 | 1512 | 1.4 | 2116.8 | 10.3 | 1 | 1206 | 1.2 | 1447.2 | 11.9 | 1447.2 | 1384.8 | Satisfied | 1.2 | 1.2 | Satisfied | 1.4 | 1.4 | Satisfied |
| Comparative Example 1 | 3 | 1010 | 1.6 | 1616.0 | 13.2 | 3 | 1010 | 1.6 | 1616.0 | 13.2 | 1616.0 | 1470.0 | Satisfied | 1.6 | 1.1 | Unsatisfied | 1.6 | 1.7 | Satisfied |
| Comparative Example 2 | 5 | 596 | 2.4 | 1430.4 | 16.3 | 5 | 596 | 2.4 | 1430.4 | 16.3 | 1430.4 | 1228.8 | Unsatisfied | 2.4 | 2.0 | Unsatisfied | 2.4 | 2.7 | Unsatisfied |
| Comparative Example 3 | 4 | 1010 | 1.8 | 1818.0 | 13.6 | 1 | 1206 | 1.2 | 1447.2 | 11.9 | 1447.2 | 1201.2 | Unsatisfied | 1.2 | 1.1 | Satisfied | 1.8 | 1.8 | Satisfied |
| Comparative Example 4 | 4 | 1010 | 1.8 | 1818.0 | 13.6 | 1 | 1206 | 1.2 | 1447.2 | 11.9 | 1447.2 | 930.0 | Unsatisfied | 1.2 | - | - | 1.8 | - | - |
| Comparative Example 5 | 2 | 1512 | 1.4 | 2116.8 | 10.3 | 1 | 1206 | 1.2 | 1447.2 | 11.9 | 1447.2 | 1243.2 | Unsatisfied | 1.2 | 1.2 | Satisfied | 1.4 | 1.4 | Satisfied |

Table 3 (continued)

| | Press workability | | | | | | |
|---|---|---|---|---|---|---|---|
| | Tensile test | (I) Presence of surface defects | (II) Presence of internal defects | (III) Erichsen test | | | Evaluation |
| | Break position | | | Erichsen value (mm) | Crack initiation position | Ratio of Erichsen value (%) | |
| Example 1 | First steel sheet | No defects | No defects | 12.1 | HAZ (on first steel sheet) | 92 | Excellent |
| Example 2 | Second steel sheet | No defects | No defects | 15.4 | HAZ (on second steel sheet) | 94 | Excellent |
| Example 3 | Second steel sheet | No defects | No defects | 10.8 | HAZ (on second steel sheet) | 91 | Excellent |
| Example 4 | Second steel sheet | No defects | No defects | 10.5 | Second steel sheet | 88 | Excellent |
| Example 5 | Second steel sheet | No defects | No defects | 10.7 | Second steel sheet | 90 | Excellent |
| Comparative Example 1 | SZ | No defects | No defects | 9.6 | SZ | 73 | Inadequate |
| Comparative Example 2 | SZ | No defects | No defects | 12.3 | SZ | 75 | Inadequate |
| Comparative Example 3 | HAZ (on second steel sheet) | No defects | No defects | 8.6 | HAZ (on second steel sheet) | 72 | Inadequate |
| Comparative Example 4 | SZ | With significant defects | With significant defects | - | - | - | Inadequate |
| Comparative Example 5 | HAZ (on second steel sheet) | No defects | No defects | 7.1 | HAZ (on first steel sheet) | 69 | Inadequate |

As presented in Table 3, in all of the Examples, excellent press workability was obtained for tailor welded blanks made of thin steel sheets that just had been subjected to cutting processing. That is, tailor welded blanks that could be produced at low cost with high productivity and that had excellent press workability were obtained, even when thin steel sheets were used as materials.

On the other hand, in Comparative Examples, adequate press workability was not obtained for tailor welded blanks made of thin steel sheets that just had been subjected to cutting processing.

REFERENCE SIGNS LIST

| | |
|---|---|
| 1 | First steel sheet (joined material) |
| 2 | Second steel sheet (joined material) |
| 3-1 | Rotating Tool (rotating tool on front side) |
| 3-2 | Rotating Tool (rotating tool on back side) |
| 4 | Butt joint (joined portion) |
| 4-1 | Stir zone |
| 4-2 | Upper stir zone |
| 4-3 | Lower stir zone |

| | |
|---|---|
| 4-4, 4-5 | Thermo-mechanically affected zone |
| 5, 5-1, 5-2 | Shoulder |
| 6, 6-1, 6-2 | Probe (pin) |
| 7 | Gripping unit |
| 8 | Outer peripheral portion |
| 9-1, 9-2 | Tip portion |

**Claims**

**1.** A tailor welded blank comprising a first steel sheet, a second steel sheet, and a butt joint joining the first steel sheet and the second steel sheet, wherein

the butt joint includes a stir zone and thermo-mechanically affected zones adjacent to the stir zone,
the stir zone has an upper stir zone and a lower stir zone adjacent to each other in a thickness direction of the tailor welded blank, and
the relationships according to the following formulas (1) to (3) are satisfied,

$$\mathrm{Pj} \geq 0.9 \times \mathrm{PbmL} \ \ldots \ (1)$$

$$\mathrm{TszL} \geq 0.9 \times \mathrm{TbmL} \ \ldots \ (2)$$

$$\mathrm{TszH} \leq 1.1 \times \mathrm{TbmH} \ \ldots \ (3),$$

where
Pj is a maximum tensile load (N/mm) per unit joining length of the butt joint,
PbmL is a smaller value (N/mm) between a product of a tensile strength (N/mm$^2$) and a sheet thickness (mm) of the first steel sheet and a product of a tensile strength (N/mm$^2$) and a sheet thickness (mm) of the second steel sheet,
TszL is a minimum value (mm) of a thickness of the butt joint,
TszH is a maximum value (mm) of the thickness of the butt joint,
TbmL is a value (mm) of a thinner one between the sheet thickness of the first steel sheet and the sheet thickness of the second steel sheet, and
TbmH is a value (mm) of a thicker one between the sheet thickness of the first steel sheet and the sheet thickness of the second steel sheet.

**2.** The tailor welded blank according to claim 1, wherein at least one of the sheet thickness of the first steel sheet and the sheet thickness of the second steel sheet is 2.5 mm or less.

**3.** The tailor welded blank according to claim 1, wherein at least one of the tensile strength of the first steel sheet and the tensile strength of the second steel sheet is 980 MPa or more.

**4.** The tailor welded blank according to claim 2, wherein at least one of the tensile strength of the first steel sheet and the tensile strength of the second steel sheet is 980 MPa or more.

**5.** The tailor welded blank according to any one of claims 1 to 4, wherein the sheet thickness of the first steel sheet and the sheet thickness of the second steel sheet are different.

**6.** A tailor welded blank production method comprising

pressing a pair of rotating tools facing each other into an unjoined portion, which is a butting portion between a first steel sheet and a second steel sheet, while rotating the rotating tools in opposite directions from each other from both sides of the unjoined portion, and
moving the rotating tools in a joining direction, to thereby join the first steel sheet and the second steel sheet and obtain a tailor welded blank, wherein
a diameter D (mm) of shoulders of the rotating tools satisfies the relationship according to the following formula (4), and

$RS \times D^3/JS$, which is expressed by a rotational speed RS (rotations/minute) of the rotating tools, the diameter D (mm) of the shoulders of the rotating tools, and joining speed JS (mm/minute), satisfies the relationship according to the following formula (5),

$$4 \times TJ \leq D \leq 10 \times TJ \ldots (4)$$

$$200 \times TJ \leq RS \times D^3/JS \leq 2000 \times TJ \ldots (5),$$

where TJ is an average value (mm) of a sheet thickness of the first steel sheet and a sheet thickness of the second steel sheet.

**7.** The tailor welded blank production method according to claim 6, wherein at least one of the sheet thickness of the first steel sheet and the sheet thickness of the second steel sheet is 2.5 mm or less.

**8.** The tailor welded blank production method according to claim 6, wherein at least one of a tensile strength of the first steel sheet and a tensile strength of the second steel sheet is 980 MPa or more.

**9.** The tailor welded blank production method according to claim 7, wherein at least one of a tensile strength of the first steel sheet and a tensile strength of the second steel sheet is 980 MPa or more.

**10.** The tailor welded blank production method according to any one of claims 6 to 9, wherein the sheet thickness of the first steel sheet and the sheet thickness of the second steel sheet are different.

**11.** A tailor welded blank production apparatus to be used for producing the tailor welded blank according to any one of claims 1 to 4.

**12.** A tailor welded blank production apparatus to be used for producing the tailor welded blank according to claim 5.

FIG. 1

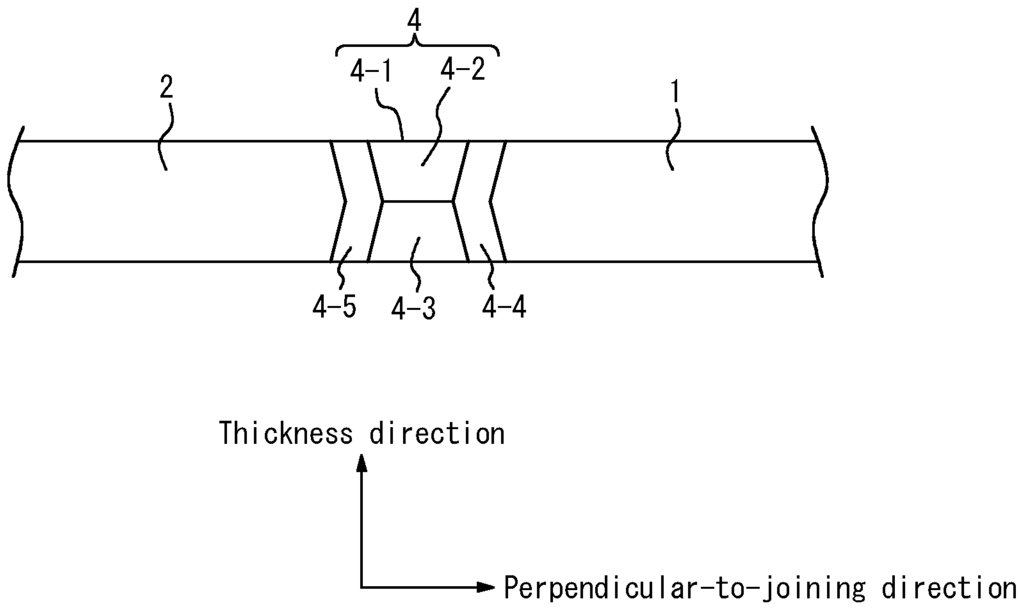
4
4-1
4-2
2
1
4-5
4-3
4-4
Thickness direction
Perpendicular-to-joining direction

FIG. 2

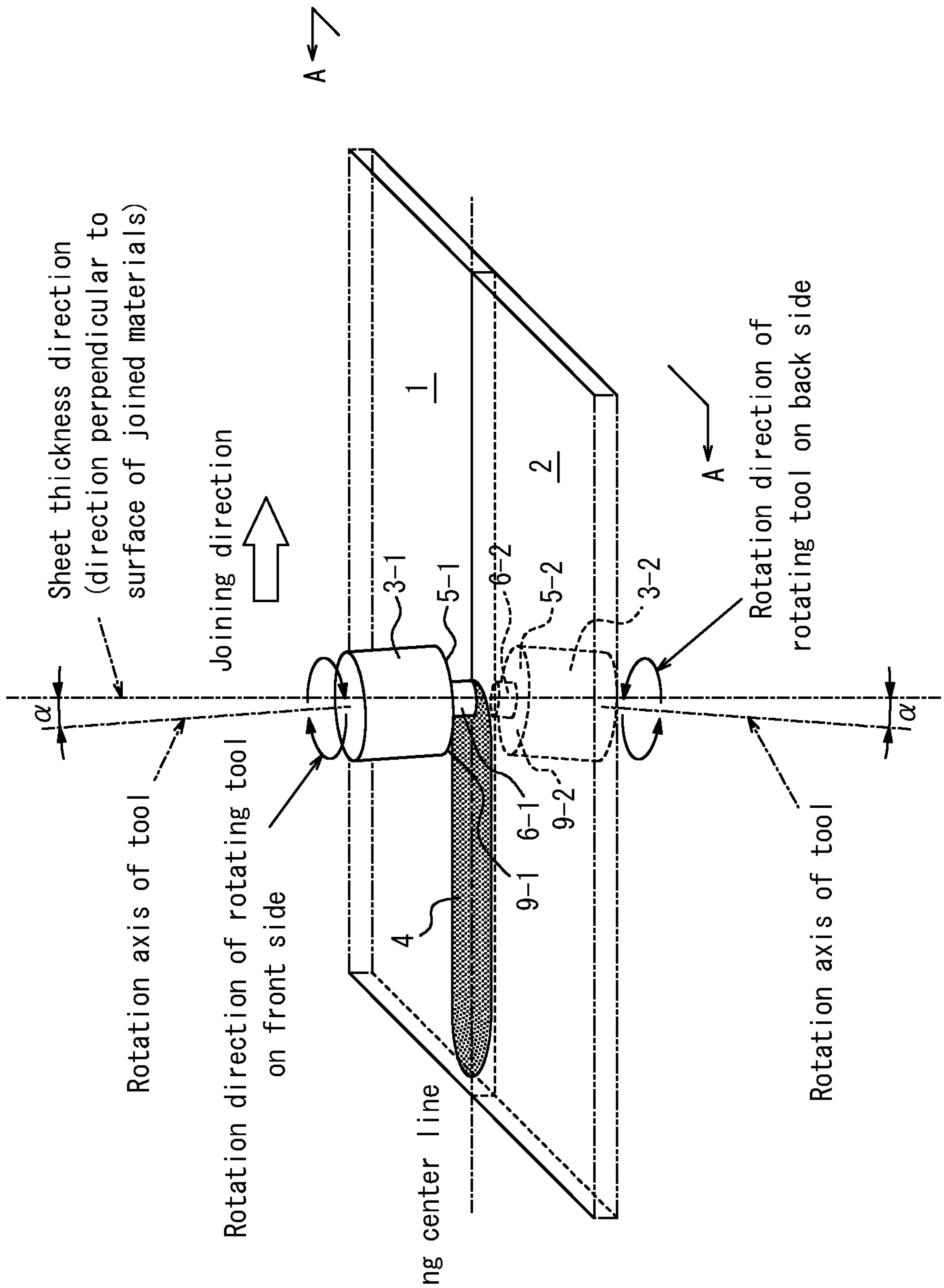
Sheet thickness direction
(direction perpendicular to
surface of joined materials)
Joining direction
Rotation axis of tool
Rotation direction of rotating tool
on front side
Joining center line
α
A
1
2
3-1
3-2
4
5-1
5-2
6-1
6-2
9-1
9-2
Rotation direction of
rotating tool on back side
Rotation axis of tool

FIG. 3

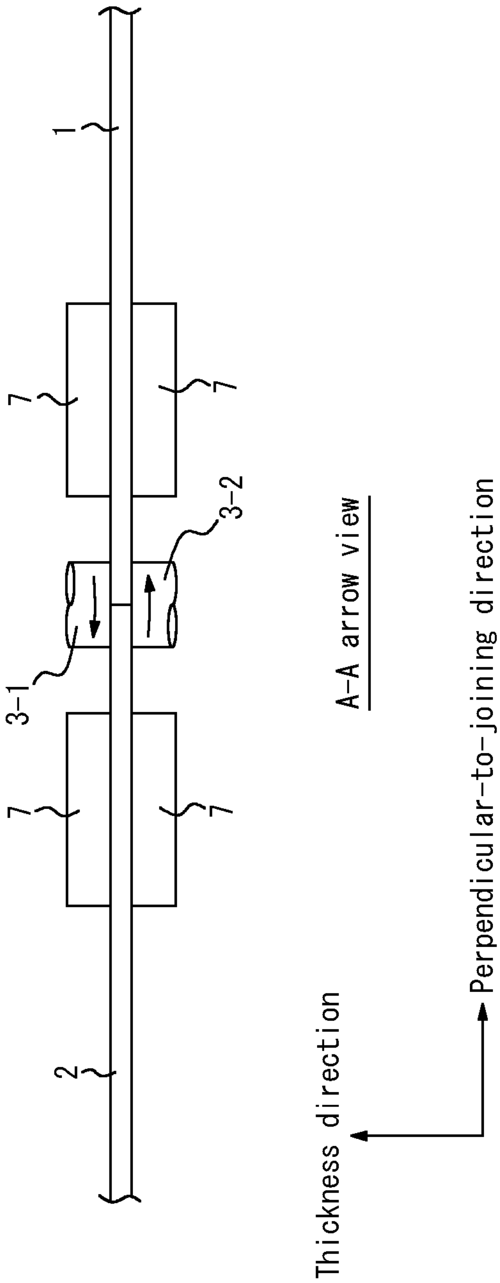
1
7
7
3-2
3-1
7
7
2
A-A arrow view
Perpendicular-to-joining direction
Thickness direction

FIG. 4

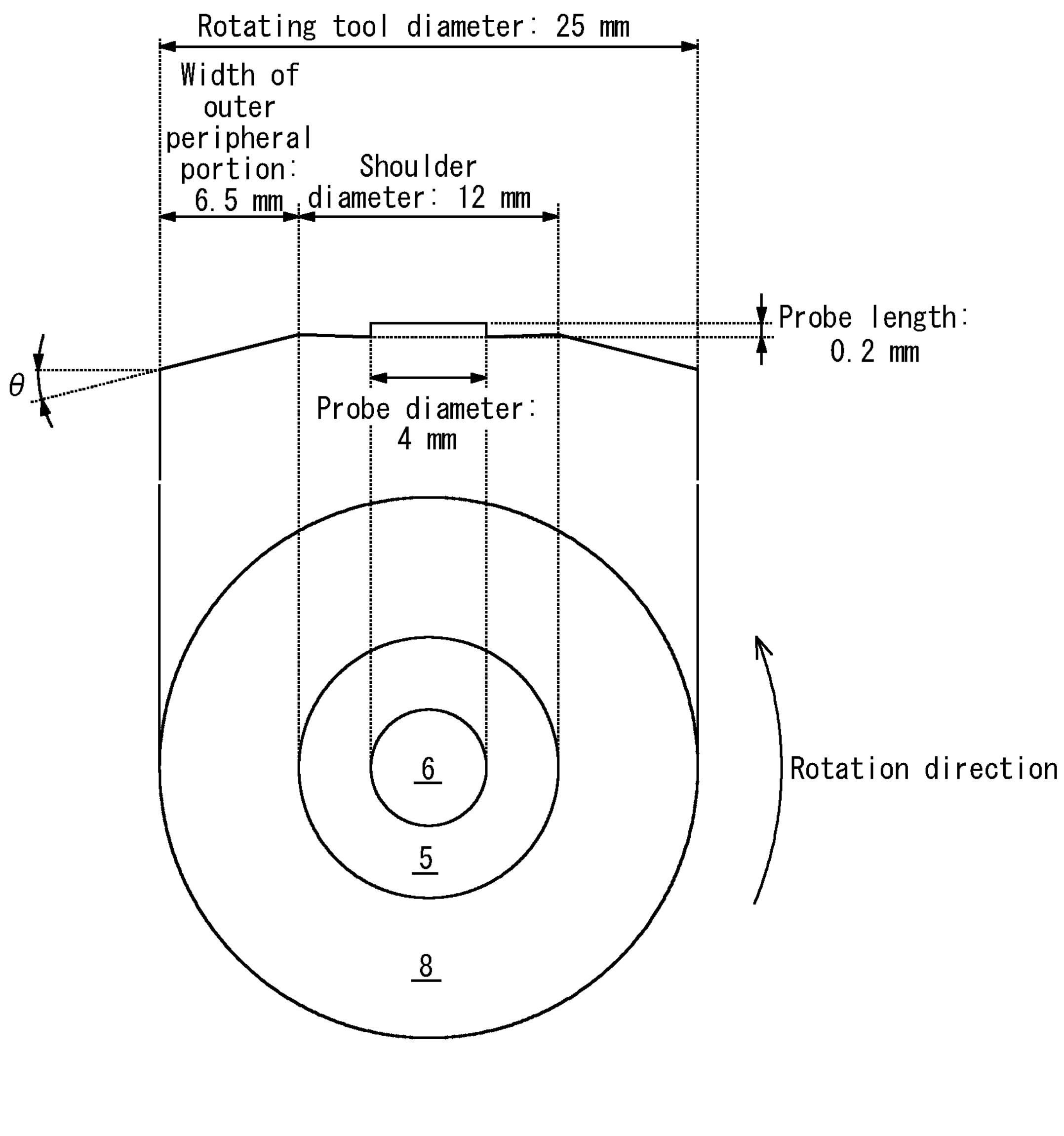
Rotating tool diameter: 25 mm
Width of outer peripheral portion: 6.5 mm
Shoulder diameter: 12 mm
Probe length: 0.2 mm
θ
Probe diameter: 4 mm
6
5
8
Rotation direction

FIG. 5

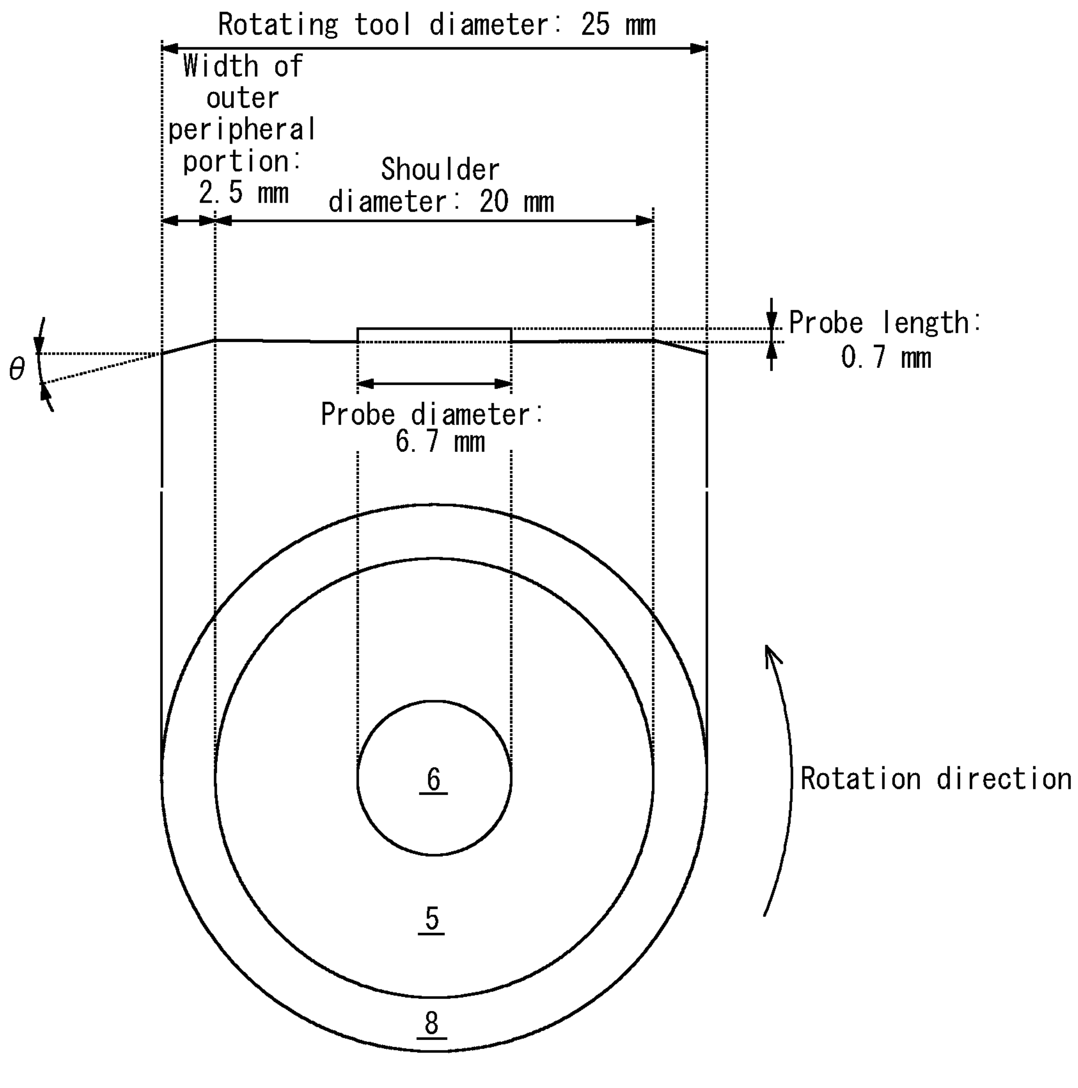

Rotating tool diameter: 25 mm
Width of outer peripheral portion: 2.5 mm
Shoulder diameter: 20 mm
θ
Probe length: 0.7 mm
Probe diameter: 6.7 mm
6
5
8
Rotation direction

## INTERNATIONAL SEARCH REPORT

International application No.
**PCT/JP2023/030825**

**A. CLASSIFICATION OF SUBJECT MATTER**

***B23K 20/12***(2006.01)i
FI: B23K20/12 360; B23K20/12 344

According to International Patent Classification (IPC) or to both national classification and IPC

**B. FIELDS SEARCHED**

Minimum documentation searched (classification system followed by classification symbols)

B23K20/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-53700 A (JFE STEEL CORPORATION) 08 April 2021 (2021-04-08) paragraphs [0005], [0031]-[0036], [0067]-[0068], [0081]-[0109], fig. 1, 11 | 1-12 |
| Y | WO 2015/068386 A1 (JFE STEEL CORPORATION) 14 May 2015 (2015-05-14) paragraph [0050], fig. 5 | 1-12 |
| A | JP 2020-124739 A (JFE STEEL CORPORATION) 20 August 2020 (2020-08-20) entire text, all drawings | 1-12 |
| A | JP 2021-45793 A (JFE STEEL CORPORATION) 25 March 2021 (2021-03-25) entire text, all drawings | 1-12 |
| A | JP 2013-761 A (FURUKAWA-SKY ALUMINUM CORP.) 07 January 2013 (2013-01-07) entire text, all drawings | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/030825**

| Patent document cited in search report | Publication date (day/month/year) | Patent family member(s) | Publication date (day/month/year) |
|---|---|---|---|
| JP 2021-53700 A | 08 April 2021 | (Family: none) | |
| WO 2015/068386 A1 | 14 May 2015 | US 2016/0263697 A1<br>paragraphs [0141]-[0142], fig. 5<br>CN 105705288 A | |
| JP 2020-124739 A | 20 August 2020 | (Family: none) | |
| JP 2021-45793 A | 25 March 2021 | US 2020/0238434 A1<br>entire text, all drawings<br>CN 110997212 A | |
| JP 2013-761 A | 07 January 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3230228 B
- JP H07505090 A
- JP 2004050189 A
- JP 3261433 B
- JP 4838385 B
- JP 4838388 B
- JP 6825630 B
- JP 6737347 B